# EUROPEAN PATENT SPECIFICATION

(11) **EP 3 118 919 B1**
(45) Date of publication and mention of the grant of the patent: **01.01.2020**
(21) Application number: 16183293.6
(22) Date of filing: 19.06.2007
(51) Int. Cl.: H01M 4/86, H01M 4/88, H01M 4/90, H01M 8/16

(54) **NOVEL THIN FILM STRUCTURES**
NEUARTIGE DÜNNFILMSTRUKTUREN
STRUCTURES DE FILM MINCE INNOVANTES

(30) Priority: 19.06.2006 FI 20060602; 01.12.2006 FI 20061064
(43) Date of publication of application: 18.01.2017
(62) Divisional of application: 07765931.6
(73) Proprietor: Teknologian tutkimuskeskus VTT Oy, 02150 Espoo (FI)
(72) Inventor: VALKIAINEN, Matti, 02044 VTT (FI); BOER, Harry, 02044 VTT (FI); KOIVULA, Anu, 02044 VTT (FI); QVINTUS-LEINO, Pia, 02044 VTT (FI); IMMONEN, Kirsi, 02044 VTT (FI); VIIKARI, Liisa, 02044 VTT (FI); SMOLANDER, Maria, 02710 Espoo (FI)
(74) Representative: Seppo Laine Oy

(56) References cited:
- EP-A1- 1 578 985
- WO-A1-2005/096430
- US-A1- 2005 095 466

## Description

### Background of the Invention

### Field of the Invention

The present invention relates to thin films. In particular, the invention concerns thin film structures which comprise a thin layer of a conductive material deposited on a substrate. Use of such thin film structures and a method of the production thereof are also disclosed.

### Description of Related Art

The use of RFID (Radio Frequency Identification) technology for various applications, such as remote detection, control and identification, is constantly growing. Generally, an RFID device comprises a microchip and an antenna circuit combined into a small tag (an "RFID tag"), which can be attached to the identification object. By equipping this kind of a tag with a power supply it is possible to convert it into an active component, which is capable of measuring and storing desired data on, for example, temperature, pressure and pH. RFID tags are relatively inexpensive components and for commercial use the power supply is expected not essentially to increase the costs thereof. Further, the weight and the size of the power supply should be adapted to the size of the tag.

There is a need for reliable power supplies which are light-weight and which can be produced at reasonable costs.

### Summary of the Invention

The present invention addresses the above problems and aims at providing a novel kind of fuel cell. In particular, the present invention aims at providing a thin film structure which can be used for example in an electrochemical cell (or fuel cell) which comprises an anode/air-electric couple where the air-cathode is formed by a thin layer of a conductive material containing an oxidative enzyme. In the present context, a fuel cell of this kind is called a "biofuel cell".

In the present technical solution, the thin cathode layer contains an electron transfer mediator mixed with the oxidizing enzyme. Further, the thin layer is being protected against wetting to allow for its storage in dry conditions and it is sufficiently porous to allow for immediate activation of the oxidizing enzyme when contacted with an aqueous solution. "Immediate activation" means that the oxidizing enzyme will reach at least 70 %, preferably at least 80 or 85 %, of its maximum activity within a short delay of not more than 10 to 5 seconds. The thin layer should be porous enough to allow for an aqueous solution to wick into the layer and efficiently to wet most of the cathode layer once the fuel cell has been contacted with such an electrolyte. This contact between the electrolyte and the oxidizing enzyme in the presence of oxygen or air will activate the enzyme and give cause to an immediate generation of electric current.

The thin films can be formed by depositing on a suitable substrate a mixture formed by an oxidizing enzyme mixed with an electron transfer mediator, and by protecting the deposited thin layer against wetting.

The novel thin films can be used in electrochemical cells for producing electricity in conjunction with electronic components having an energy demand of 1 mW or less. One typical application is as a humidity sensor.

More specifically, the present thin film is mainly characterized by what is stated in the characterizing part of claim 1.

The use according to the present invention is characterized by what is stated in claim 12 and the method of producing the present thin film structures by what is stated in claim 14.

Considerable advantages are obtainable by the present invention. Thus, when the present thin films form parts of electrochemical cells these can be stored in inactivated state and the electrolyte (moisture) is brought into contact with the electrodes only when the invention is taken into use. The effective lifetime of electrochemical cells containing an electrode of the present kind is about three weeks when the cell is in activated condition and the shelf life at least one year from the manufacture. The novel structures are environmentally friendly and can easily be disposed of.

The thin film can be manufactured by printing technology. Printing as a manufacturing method greatly lowers production costs and enables mass-production of cheap, single-use devices. A structure which contains a thin film structure of the present kind can therefore be produced by the techniques of printing and lamination.

It has been found that oxidative enzymes together with electron transfer mediators can be combined with conductive ink simultaneously maintaining the biological activity of the enzyme. Expression of the enzymatic activity can be enhanced by increasing the porosity of the conducting ink e.g. with the aid of carbon nanotubes. Simultaneously, the carbon nanotubes or particles of carbon in other forms or silver are used to create the sufficient conductivity of the ink. Various additives like binders, hygroscopic substances like polymers and sugars can be added to the ink in addition to the conductive pigment to enhance the stability of the enzyme.

Conductive polymers (particularly polyanilin) can also be used as the conductive matrix in the ink. In that case the oxidative enzyme itself can be used for polymerisation of aniline monomers using the electron transfer mediator as the dopant ion in the enzymatic polymerisation process. Carbon nanotubes can be used to increase the expressed enzymatic activity and electrochemical performance also in the case of conductive polymer-based inks.

The invention can be widely utilised in the production of printed biosensors and biofuel cells. Particularly, laccase containing inks can be used in biofuel cells utilising oxygen as the cathodic fuel of the cell. Laccase has got also various application possibilities as biological components of biosensors for e.g. phenolic compounds.

The invention can also be used in applications with (RFID) Tags capable of measuring and storing data. Also printed electronics are possible uses, e.g. electronic on cereal packings and/or for amusement purposes.

Next, the invention will be examined more closely with the aid of a detailed description and a number of working examples.

### Brief Description of the Drawings

Figure 1 shows the relative laccase activity in the prints as a function of storage time at different conditions;
Figure 2a shows the activity yield (%) of printed laccase (carbon nanotube ink (1)) after 1 minute heat-treatment at different temperatures using ThL laccase;
Figure 2b shows the corresponding activity yield (%) using rMaL laccase;
Figure 3 shows in a side view the structure of a biofuel cell according to one embodiment of the invention;
Figure 4 indicates the performance (electrical potential) as a function of time for a cell according to the present invention having the basic structure of a printed Zn cathode/printed laccase anode in contact with humid air, provided with a moisture barrier and in contact with dry air, and without a moisture barrier and in contact with dry air;
Figure 5 shows the performance (electrical potential) as a function of time for cells comprising three different separators for the cathode;
Figure 6 shows a side view of a further cell structure;
Figure 7 indicates the performance (electrical potential) of a printed laccase PANi-Zn cell under different loads;
Figure 8 shows a side view of a simplified cell structure used for the experiments of Figure 9;
Figure 9 depicts the performance (electrical potential) of a cell consisting of an Al-tape anode,
a capacitor paper separator and a laccase print cathode at a constant load of 2.2 kohm;
Figure 10a shows the simplified structure of a cell enclosed in a sealing polymer film;
Figure 10b indicates the performance of this embodiment compared to that of a similar cell placed at continuously humidified conditions;
Figure 10c shows a side view of the same cell; and

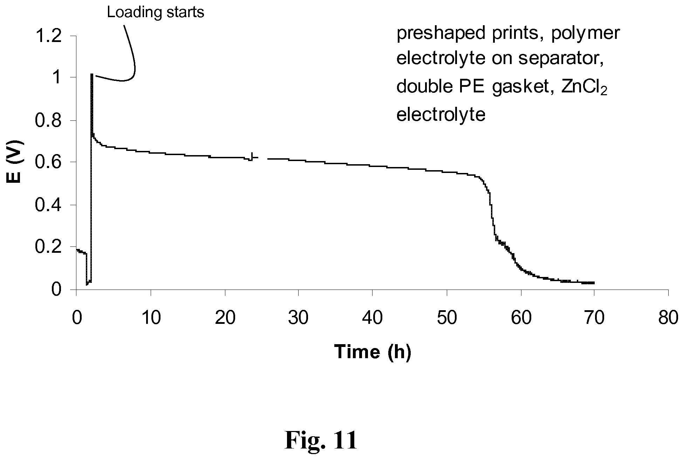

Figure 11 shows the performance of a cell consisting of Zn-print anode, polymer electrolyte treated paper separator and laccase -print cathode measure at a constant load of 2.2 kohm.

### Description of Preferred Embodiments

According to one aspect, in a biofuel cell structure having the traditional structure comprising an anode and a cathode which is spaced apart from the anode, the cathode, which comprises a substrate with a thin conductive layer containing an oxidizing enzyme mixed with an electron transfer mediator, the thin layer is protected against wetting to allow for its storage in dry conditions and it is sufficiently porous to allow for immediate activation of the oxidizing enzyme when contacted with an aqueous solution.

According to another aspect, an oxidative enzyme together with an electron transfer mediator is combined with conductive inks based on e.g. different forms of carbon or conductive polymers simultaneously maintaining the biological activity of the enzyme. This ink is used for forming a thin, enzyme containing layer which is capable of performing as an electrode in an electric/galvanic cell. Such a layer can be stored for several months still expressing the enzymatic activity when re-moisturised and widely utilised in the production of cheap, single-use printed biosensors and biofuel cells.

According to one preferred embodiment, the thin layer of the oxidizing enzyme is formed by printing, coating or by an equivalent technique (such as spraying or film-transfer deposition) to provide a layer having an average thickness of, generally about 10 to 150 um, typically about 20 nm to 100 um.

For proper function, an electrolyte needs to be introduced into the biofuel cell so as to establish galvanic contact between the electrodes.

As stated above, we have found that the cathode layer needs to be so porous that it will be capable of wicking any aqueous electrolyte solution to as to allow for activation of the cathode. In functional terms, the porosity needs to be sufficient for the cathode to reach a level of activity, which is at least 70 % of the maximum activity level within 10 seconds, preferably about 5 seconds, in particular about 2 seconds, from the point of time when the layer is contacted with water and optionally, but preferably, oxygen. At least 80 %, and in particular at least 90 %, of the maximum activity level is, however, generally achieved already within about 1 to 5 seconds from the time when the solution has contacted more than 50 % of the cathode material.

In order further to improve the wicking of the aqueous solution, in a preferred embodiment, the thin cathode film layer is deposited on a porous substrate. Such porous substrate can be a porous fibrous web or sheet of natural or synthetic origin. On particularly preferred embodiment comprises sheets of cellulosic or lignocellulosic materials, such as conventional paper or cardboard sheets. Another embodiment comprises sheets of cellulosic or lignocellulosic fibres bonded together with synthetic resins, such as non-woven products. Also completely synthetic layers or, for example expanded polymers, can be used as well as felted layers of natural or synthetic fibres or combinations thereof, and textiles and mats.

In practice, one particular convenient working embodiment comprises filter paper. In particular filter paper of bleached or unbleached, wood-free or wood-containing fibres having a surface weight of about 40 to 90 g/m² is used. Bleached chemical fibres are particularly preferred.

For proper function, the cathodic enzyme should have a redox potential, expressed as V vs. NHE, of at least 0.3, preferably at least 0.35 and in particular 0.4.

In a biofuel cell according to the present invention, the oxidizing cathodic enzyme is preferably a peroxidase or an oxidase. Typically, the enzyme is selected from the group of laccases (EC 1.10. 3.2), catechol oxidases (EC 1.10. 3.1), tyrosinases (EC 1.14. 18.1), bilirubin oxidases (EC 1.3. 3.5), peroxidase (EC 1.11. 1.7), manganase peroxidase (EC 1.11. 1.13), lignin peroxidase (EC 1.11. 1.14), cytochrome-c oxidase (1.9.3.1), L-ascorbate oxidase (1.10.3.3) and ceruloplasmin (1.16.3.1).

Preferably and typically, the oxidative enzyme is a laccase which can be selected from laccases obtainable from *Melanocarpus* (EC 1.10.3.2), from Trametes (EC 1.10.3.2), from *Pycnoporus* (EC 1.10.3.2), from *Rhizoctonia* (EC 1.10.3.2), from *Coprinus* (EC 1.10.3.2), from *Myceliophtora* (EC 1.10.3.2), from *Pleurotus* (EC 1.10.3.2), *from Rhus* (EC 1.10.3.2), from *Agaricus* (EC 1.10.3.2), from *Aspergillus* (EC 1.10.3.2), from *Cerrena* (EC 1.10.3.2), from *Curvularia* (EC 1.10.3.2), from *Fusarium* (EC 1.10.3.2), from *Lentinius* (EC 1.10.3.2), from *Monocillium* (EC 1.10.3.2), from *Myceliophtora* (EC 1.10.3.2), from *Neurospora* (EC 1.10.3.2), from *Penicillium* (EC 1.10.3.2), from *Phanerochaete* (EC 1.10.3.2), from *Phlebia* (EC 1.10.3.2), from *Podospora* (EC 1.10.3.2), from *Schizophyllum* (EC 1.10.3.2), from *Sporotrichum* (EC 1.10.3.2), from *Stagonospora* (EC 1.10.3.2) from *Chaetomium* (EC 1.10.3.2), from *Bacillus* (EC 1.10.3.2), from *Azospirillum* (EC 1.10.3.2) and from *Trichoderma* (EC 1.10.3.2).

The enzyme has an activity of about 1 to 100,000 nkat/g, preferably 10 to 500 nkat/g, and it is employed in an amount of 0.0001 to 10 mg protein, 0.01 to 5 mg per g of dry matter of the cathode layer.

Generally, in the present invention a mediator is used which exhibits good electrochemical properties. Such a mediator can be selected from the group consisting of ABTS [2,2'-azino-bis(3-ethylbenzothiazoline-6-sulfonic acid)], methylsyringate [methyl 3,5-dimethoxy-4-hydroxybenzoate] and other methoxy and dimethoxy phenols, and ferrocenecarboxyaldehyde and other ferrocene derivates, and mixtures thereof, although this list is by no means exhaustive.

The concentration of the mediator in the in the cathode layer can vary within a broad range. Typically, the concentration is about 0.001 to 10.0 % calculated from the weight of the cathode layer.

According to a preferred embodiment, the mixture of the enzyme and the mediator further contains conductive ink. Such a conductive ink typically comprises an electrically conductive component selected from the group consisting of carbon nanotubes, metal particles, carbon particles and inherently conductive polymers and mixtures thereof and, optionally, a binder. According to one embodiment, an inherently conductive polymer forms the conductive matrix of the ink. In this case, the conductive ink is then obtainable by polymerizing the monomer corresponding to the conductive polymer in the presence of the oxidative enzyme using the mediator as a dopant for the polymer, said oxidative enzyme catalyzing the polymerization reaction.

In order to increase the enzymatic activity and porosity of the cathode layer, the conductive ink may further contain carbon nanotubes.

As discussed above, it is possible to modify the composition of the thin layer by incorporating certain components, which bring along properties of increased water absorption or moisture retention. Thus, one embodiment comprises a layer with a water-soluble polymer, such as polyvinylalcohol, as a moisture absorbing component, and the conductive ink comprises a hydroscopic substance, such as a polymeric component or a polysaccharide, for enhancing the stability of the enzyme. The moisture absorbing component is typically present at a concentration of 0.001 to 10 wt-%, in particular about 0.1 to 7.5 % by weight of the dry matter of the layer. The utility of the absorption components will be examined more closely further below.

One particular interesting use of the present thin layers is as cathode in electrochemical cells.

Specific laminar structures for the cells will be shown in more detail below in connection with the working examples.

As noted above, the thin layer is protected against wetting to allow for its storage in dry conditions. There are various ways of protecting the thin layer. Conventionally, it can kept in a rigid or flexible casing having a wall and a closing mechanism which is moisture proof or, preferably, moisture and water proof. The casing can also be shaped into a pouch or envelope. Preferably, the active layer is kept dry by encapsulating the layer in a material which is impermeable to liquid water and water vapour.

The encapsulating material can be employed in the form of single- or multilayer structures. Such comprise for example at least one film or sheet or layer of a suitable polymeric material or of a metal or a combination of two or more materials, such as two or more polymeric materials or one or several polymeric materials and at least one metal, preferably in the form or a foil. The polymeric materials can used in the form of films, foils and coating layers. Any of the afore-going barrier materials can be used in combination with fibrous sheets and webs, such as paper and cardboard substrates.

Thus, as particular examples of materials suitable for the present invention, the following can be mentioned: polymer films, including PE, PP, VC-copolymers, isobutylene polymers, PVDC-copolymers, polyurethanes, PE-Vac-polymers, polyamides, PTFE, or by waxes, metals, metal foils, platey pigment particles, such as kaolin, talc and combinations and mixtures thereof. Each of these can be employed in combination with a fibrous substrate, such as paper or board. Naturally, combinations of polymeric films, metal foils and paper and board are possible.

By incorporating platey pigments into the material, the barrier properties of both polyolefinic and other thermoplastic films can be improved.

A water sealing material can also be applied on the fibrous network thus creating a composite of fibrous network and water sealing material. In this case also, the barrier properties of the water sealing material can be improved by incorporating platey pigments.

Coating of the fibrous network or a combination of the materials can be done, for example by extrusion coating, dispersion coating, laminating or other coating methods, lamination being particularly advantageous.

One preferred embodiment of the present invention comprises a laminar structure with, in the indicated order,
- a first planar layer forming a current collector,
- a second planar layer placed on top of the first layer, said second layer forming the anode of the cell,
- a third layer which forms a porous substrate, and
- a fourth layer formed on top of the porous substrate by printing, said fourth layer comprising a mixture of a phenoloxidase and a mediator.

There can be a fifth layer is placed in-between the second and the third layers, said fifth layer being capable of separating the second and the third layers and allowing for migration of charge carriers between the electrodes of the cell. Further, the fourth layer can be covered by a sixth layer which is capable of retaining moisture and which is permeable to oxygen.

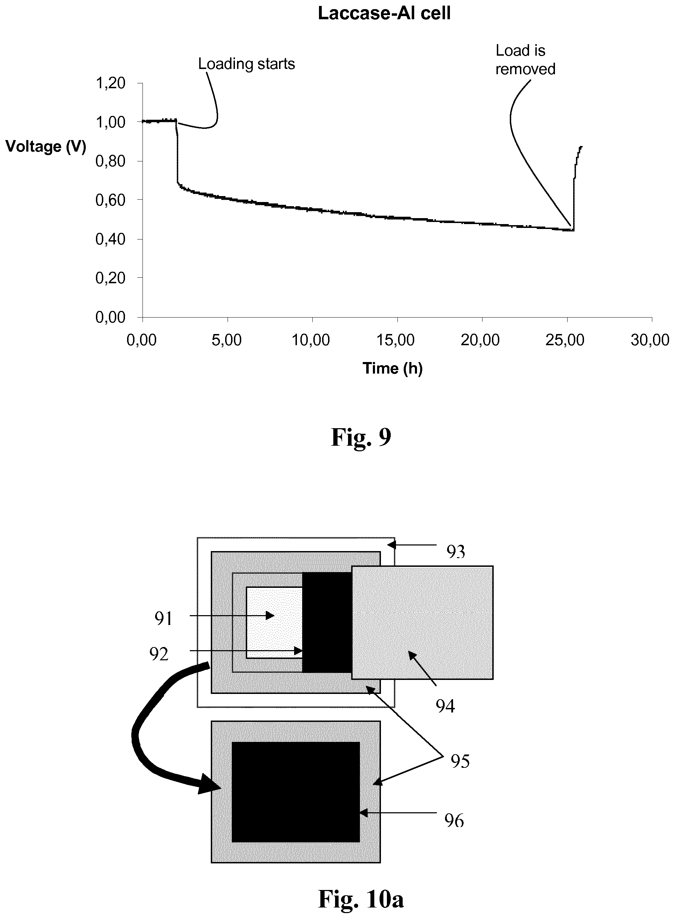

In one particularly convenient embodiment (cf. Figure 10a) the third layer and the fifth layer are formed by two portions of the same laminar sheet, which has been folded to provide two overlapping portions between the second and the fourth layers. In that structure, the first and the second layers are deposited on a first portion of the laminar sheet and the fourth and any sixth layers are deposited on the same side of the laminar sheet within a second portion forming the adjacent and opposite portion of the sheet with respect to a folding line of the laminar sheet, whereby the second and fourth layers can be brought into in juxtaposed position by folding the laminar sheet along the folding line to abut the back parts of the laminar sheet portions.

In any of the above laminates, there is optionally a seventh layer between the fourth and the sixth layer, which seventh layer is electrically conductive and permeable to oxygen.
The third, and any fifth layer, is/are preferably capable of wicking moisture for activating the cathode layer.

In order to utilize the property of long shelf life, and in order to protect the laminar structure from ambient conditions, the biofuel cell is preferably fitted into a package which is impermeable to air and moisture for storing in inactivated condition.

As a result of the above, a structure is obtained, wherein the cathode layer can be activated by oxygen from the ambient air, or it can be activated by oxygen dissolved in an aqueous solution used for moisturizing the substrate of the cathode. The enzyme (e.g. laccase) based biofuel cell needs moisture in order to be able to produce current output. This phenomena can be utilised in the structure of a electrochemical humidity indicator. If no moisture or humidity is present, the output of the fuel cell is zero. When the cell is exposed to humidity/moisture, the presence of water molecules enables laccase to function. In order to be able to determine moisture of the surrounding air, moisture absorbing substances (e.g. PVA) can be added on the cathodic sensing layer of the cell.

This invention can be further developed into a system, which integrates the exposure of the sensing layer to humidity above a certain level. The integration is based on the fact, that if humidity is below certain, predetermined level, no reaction is taking place. The threshold level of the humidity sensor can be tailored by adding substances with different humidity absorbing capacities to the sensing layer.

**Table 1. Properties of different laccases utilising O₂ as the cathodic fuel**

| **Enzyme** | **Cofactor and pH optimum** | **Mediators tested** | **Redox potential of the enzyme V vs. NHE** | **Specific activity** |
|---|---|---|---|---|
| Laccase from *Melanocarpus albomyces* (rMaL; EC 1.10.3.2); secreted to the culture supernatant; monomeric | 4 x Cu; pH 3.5 (ABTS) | ABTS | 0.46 | 840 nkat/mg = 50 U/mg (on ABTS, pH 4.5) |
| Laccase from the fungus *Trametes hirsuta* (ThL; EC 1.10.3.2); secreted to the culture supernatan; monomeric | 4 x Cu; pH~3 (ABTS) | ABTS Methyl syringate Ferrocene-carboxy-aldehyde | 0.78 | 2400 nkat/mg = 140 U/mg (on ABTS, pH 4.5) |

The ink used in the present invention can have various compositions as shown in the below table:

**Table 2. Potential, conductive ink formulations used in the printed laccase-containing layers**

| **Ink n:o** | **Name of the ink** | **Ink composition** |
|---|---|---|
| 1 | Carbon based ink | Commercial carbon-based ink (e.g. DuPont BQ231) with carbon nanotubes, mediator and enzyme mixed in the ink |
| 2 | Silver based ink | Commercial silver-based ink (e.g. DuPont BQ129) with carbon nanotubes, mediator and enzyme mixed in the ink |
| 3 | Carbon nanotube ink | Carbon nanotubes, stabilisers, mediator and enzyme mixed in ink binder |
| 4 | PANi-based ink | Aniline enzymatically polymerised in the presence of the mediator (as the counter ion) -polymerising enzyme retained in the polymer - nanotubes added to the polymerisation mixture |
| 5 | Experimental carbon based ink | Carbon black (Printex XE-2) as filler and polyvinylacetate (Vinnapas B 1,5 sp) as binder in ethylacetate solvent together with a dispersion agent |
| 6 | Zn-ink | Commercial carbon-based ink (DuPont BQ231), zinc powder mixed with the ink |

The following examples disclose in more detail the properties of the cathode, the structures of the cells and the properties thereof.

### Example 1. Storage stability of the printed cathode

Laccase containing layers produced with hand coater (ink 3 in Table 2) were stored under different conditions (-22°C, +4.5°C (dry/humid/ under nitrogen) or +22°C) and the remaining enzymatic activity based on oxygen consumption of the printed layer in aqueous solution was determined during the storage in order to evaluate the long-term storage stability of the printed layers. It was found out that considerable proportion of the activity in the carbon nanotube ink remained even after 20 weeks of storage in ambient conditions. The example indicates that fuel cells based on printed laccase cathode can be stored in dry conditions for several months before use and reactivated again in the presence of moisture during the activity measurement.

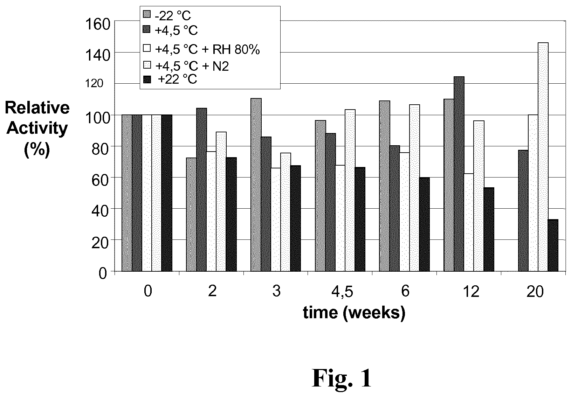

Figure 1 shows the relative laccase activity in the prints as a function of storage time under different conditions.

### Example 2. The tolerance of the printed cathode to heat treatment

Laccase containing layers produced with hand coater (ink 3 in Table 2) were incubated in different temperatures (+40, 50, 60 or 90°C) for one minute and the remaining enzymatic activity based on oxygen consumption of the printed layer was determined after the treatment in order to evaluate the heat treatment stability of the printed layers. It was found that both laccases (ThL and rMaL) could tolerate the heat treatment at 60°C; rMaL even at 90°C.

The example indicates that the printed cathode based on laccase can be used in the production of fuel cells even if heat treatments are required during the manufacturing procedure.

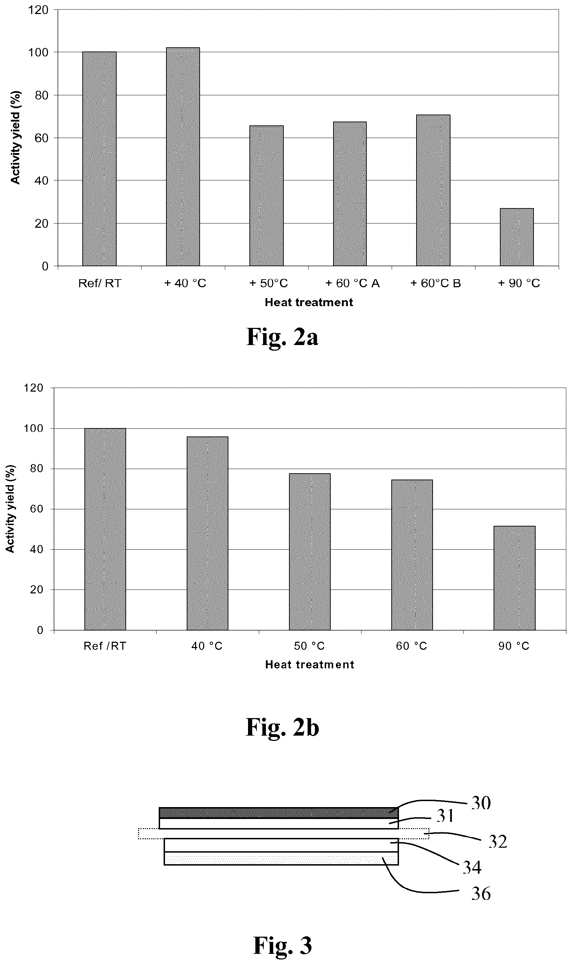

Figures 2a and 2b show the activity yield (%) of printed laccase (carbon nanotube ink (1)) after 1 minute heat-treatment at different temperatures, Figure 2a being for ThL laccase and Figure 2b for rMaL laccase

### Example 3. Performance of laccase -Zn cell in humidified conditions

Cell structure (Figure 3): Layer 30 laccase-ink (Ink 1 in Table 2), filter paper 31 of print (e.g. Whatman 1), a separator 32 (e,g, Whatman 1), filter paper of print 34 (e.g. Whatman 1) and a printed Zn- anode 36 Ink 6 in Table 2).

A laccase - Zn based cell was monitored under humidified conditions using a constant flow of humidified air (100%) over the printed laccase cathode and under dry conditions using non humidified air. An Electroflex EF453 galvanostat (Szeged, Hungary) connected to a PC was used to monitor the performance of the cell

The cell was sandwiched between graphite plates in modified single fuel cell hardware so that the cathode side was towards the air channels in the graphite plate. In the humidified experiments in order to keep the cathode moist, air to the cathode was led through a Nafion-tube installed in a water bath. The humidifier was constructed by Fuel Cell Technology, Inc., USA. The temperature of the water bath was kept 1 - 2 °C above room temperature. The cathodic side was protected with oxygen permeable, humidity impermeable film. The voltage versus time was recorded with a potentiostat and the current draw from the cell was arranged with a resistor.

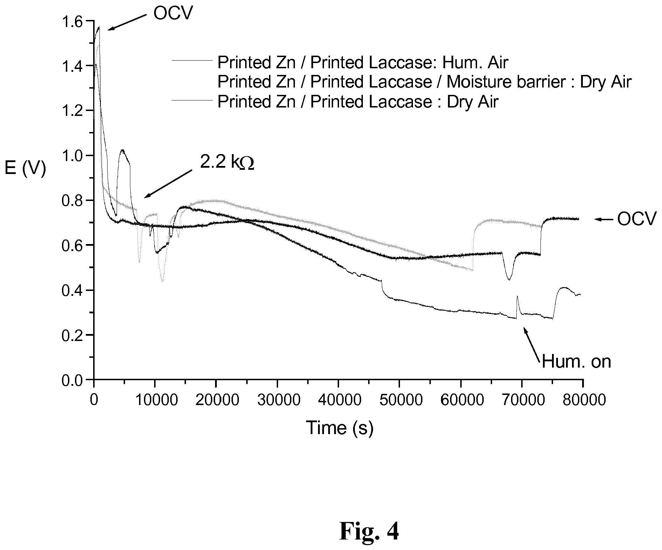

The results of this experiment are shown in Figure 4. An open circuit voltage (OCV) of about 1.5 V was observed, which dropped to about 0.7 V when a 2.2 kΩ load was applied.

This example demonstrates the capability of the laccase - Zn cell to produce power already when small amount of aqueous solution is added to activate the cell and the capability of the cell to function without further addition of moisture when enclosed in a film with suitable permeability properties. This last feature is further elaborated in Example 6.

### Example 4. Performance of laccase -Zn cell using different separators

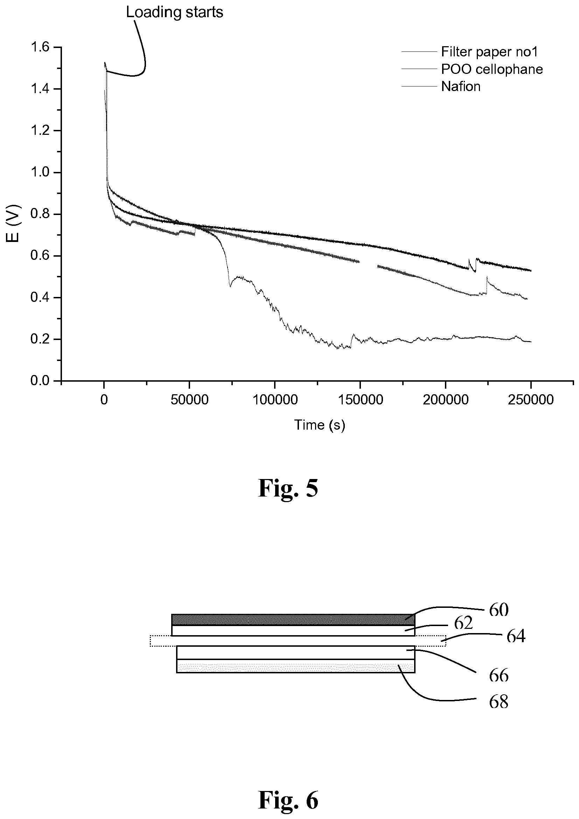

Examples using different separators demonstrate that inexpensive separators such as filter paper and P00 cellophane can be used in the laccase - Zn cell to deliver a reasonable current density under a 2.2 kOhm load. The results are disclosed in Figure 5.

### Example 5. Performance of laccase PANi - Zn cell

The biocell structure comprised the following overlapping layers (Figure 6):
Laccase PANi-ink 60 (Ink 4 in Table 2), a filter paper of print 62 (Whatman 1), a filter paper separator 64 (Whatman 1), a filter paper of print 66 (Whatman 1) and a printed Zn- anode 68. (Ink 6 in Table 2).

A laccase PANi - Zn based cell was monitored under humidified conditions using a constant flow of humidified air (100%) over the printed laccase cathode. An Electroflex EF453 galvanostat (Szeged, Hungary) connected to a PC was used to monitor the performance of the cell.

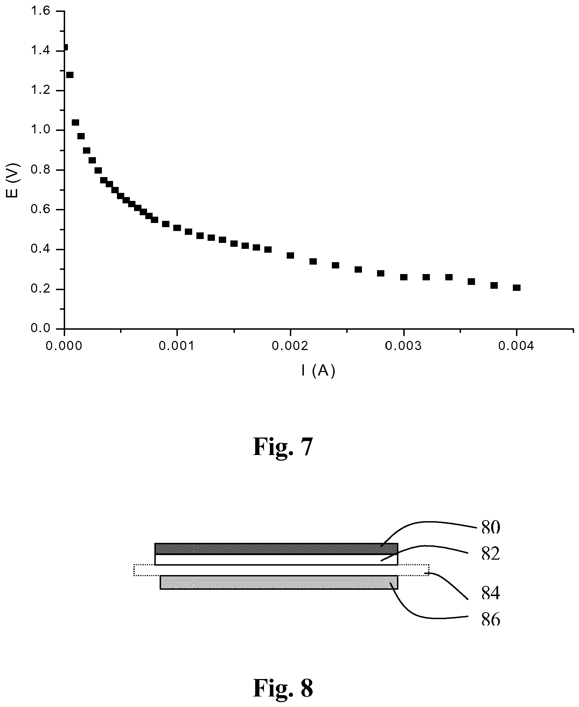

The cell was sandwiched between graphite plates in modified single fuel cell hardware so that the cathode side was towards the air channels in the graphite plate. In the humidified experiments in order to keep the cathode moist, air to the cathode was led through a Nafion-tube installed in a water bath. The humidifier was constructed by Fuel Cell Technology, Inc., USA. The temperature of the water bath was kept 1 - 2 °C above room temperature. The voltage as a function of the current drawn from the cell was recorded with a potentiostat as shown in Figure 7.

An open circuit voltage (OCV) of about 1.4 V was observed, which dropped to about 0.7 V when a current of 0.5 mA was drawn from the cell. The example demonstrates the potential of the printed laccase PANi - Zn cell to generate a current of 0.5 - 1 mA at 0.7 - 0.5V

### Example 6. Performance of laccase - Al cell

Cell structure (Figure 8): Laccase-ink 80 (Ink 1 in Table 2), Filter paper of print 82 (Whatman 1), Capacitor paper separator 84, Al-tape 86.

The arrangement of the measurement was as in Example 4. The voltage of a cell (active area 16 cm²) was monitored as a function of time under constant load 2.2 kohm, cf. Figure 9.

This example demonstrates the capability of the laccase cathode to operate in conjugation with aluminium anode. (The anode is not optimized to give the best obtainable performance.)

### Example 7. The cell functioning when enclosed in a film with suitable permeability properties

Small sealed fuel cell with Cu tape current collectors and Goretex for aeration at the cathode loaded with a 2.2 kΩ load. In Figure 10a, the following reference signs are used:
Reference numeral 93 stands for a plastic insulator, and numerals 95 represent current collectors (e.g. copper collectors) and 91 a backwindow of permeable Goretex film. The laccase cathode is given the reference numeral 92 and the filter paper separator nr 95.

The anode comprises a zinc layer 96 (Ink 6 in Table 2).

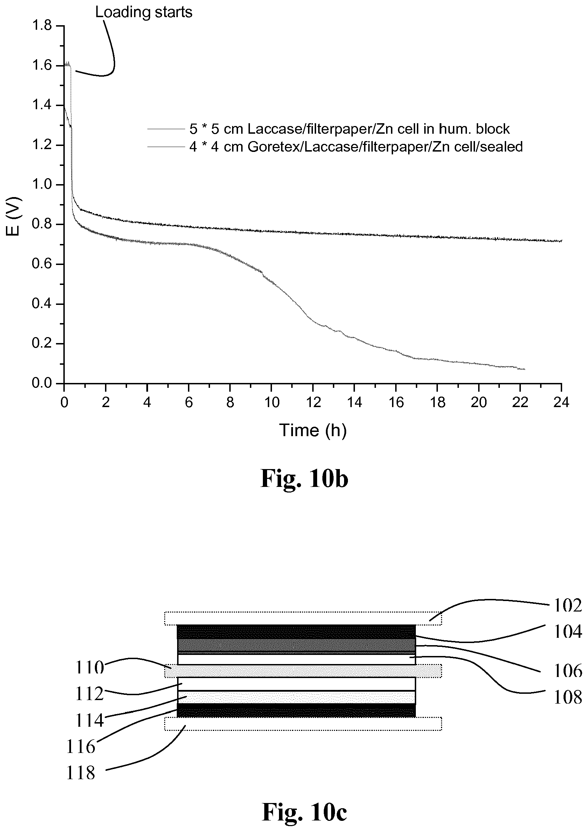

The performance of this structure is shown in Figure 10b, which indicates that it provided a quite stable potential output for several hours under load.

Figure 10c shows the specific cell laminate structure:
Cardboard with polyethylene finish 102
Current collector (Conductive print) 104
Cathode (Laccase -print) 106
Filter paper of print (Whatman 1) 108
Separator (polymer electrolyte treated paper) 110
Filter paper of print (Whatman 1) 112
Zn-print- anode 114
Current collector (Conductive print) 116
Cardboard with polyethylene finish 118

The prevention of the cell from drying and at the same time allowing oxygen transport to the cathode can be facilitated by polyethylene films and finishing as in this example.

## Claims

1. A thin film structure, which comprises a substrate with a thin conductive layer containing an oxidizing enzyme mixed with an electron transfer mediator, said thin layer being protected against wetting to allow for its storage in dry conditions and further being sufficiently porous to allow for immediate activation of the oxidizing enzyme when contacted with an aqueous solution,
wherein the mixture of the enzyme and the mediator further contains a conductive ink which comprises an electrically conductive component selected from the group consisting of carbon nanotubes, metal particles, carbon particles and inherently conductive polymers and mixtures thereof and, optionally, a binder, and
wherein the thin layer of the oxidizing enzyme is formed by printing, coating or by an equivalent technique to provide a layer having an average thickness of about 20 nm to 100 µm, and the layer comprises a water-soluble polymer as a moisture absorbing component, and the conductive ink comprises a hydroscopic substance for enhancing the stability of the enzyme, the moisture absorbing component being present at a concentration of 0.001 to 10 wt-% by the dry matter of the layer.

2. The thin film structure according to claim 1, wherein the thin layer is so porous that the cathode layer will reach a level of activity, which is at least 70 % of the maximum activity level within 10 seconds, preferably about 5 seconds, in particular about 2 seconds, from the point of time when the layer is contacted with water and oxygen.

3. The thin film structure according to claim 1 or 2, wherein the substrate comprises a porous substrate selected from the group consisting of porous fibrous webs and sheets of natural or synthetic origin, in particular the porous substrate is selected from cellulosic and lignocellulosic materials, such as paper or cardboard sheets, for example filter paper.

4. The thin film structure according to any of the preceding claims, wherein the oxidizing enzyme is selected from the group of peroxidases and oxidases, in particular the enzyme is selected from the group of laccases (EC 1.10. 3.2), catechol oxidases (EC 1.10. 3.1), tyrosinases (EC 1.14. 18.1), bilirubin oxidases (EC 1.3. 3.5), peroxidase (EC 1.11. 1.7), manganase peroxidase (EC 1.11. 1.13), lignin peroxidase (EC 1.11. 1.14), cytochrome-c oxidase (1.9.3.1), L-ascorbate oxidase (1.10.3.3) and ceruloplasmin (1.16.3.1).

5. The thin film structure according to claim 4, wherein the enzyme has an activity of about 1 to 100,000 nkat/g, preferably 10 to 500 nkat/g, and it is employed in an amount of 0.0001 to 10 mg protein/g of dry matter of the cathode layer, and wherein, optionally, the enzyme has a redox potential, expressed as V vs. NHE, of at least 0.3.

6. The thin film structure according to claim 4 , wherein the mediator is selected from the group consisting of ABTS [2,2'-azino-bis(3-ethylbenzothiazoline-6-sulfonic acid)], methylsyringate [methyl 3,5-dimethoxy-4-hydroxybenzoate] and other methoxy and dimethoxy phenols, and ferrocenecarboxyaldehyde and other ferrocene derivates, and mixtures thereof, and the mediator is preferably present in a concentration of 0.001 to 10.0 wt-% of the cathode layer.

7. The thin film structure according to any of the preceding claims, comprising a water-soluble polymer selected from polyvinylalcohol as a moisture absorbing component, and the conductive ink comprises a hydroscopic substance selected from a polymeric component or a polysaccharide for enhancing the stability of the enzyme, wherein the moisture absorbing component is preferably present at a concentration of 0.1 to 7.5 wt-%.

8. The thin film structure according to any of the preceding claims forming a part of a laminar structure with, in the indicated order,
- a first planar layer forming a current collector,
- a second planar layer placed on top of the first layer, said second layer forming the anode of the cell,
- a third layer which forms a porous substrate, and
- a fourth layer formed on top of the porous substrate by printing, said fourth layer comprising the thin film construction and containing a mixture of a phenoloxidase and a mediator, and
wherein a fifth layer is placed in-between the second and the third layers, said fifth layer being capable of separating the second and the third layers and allowing for migration of charge carriers between the electrodes of the cell and wherein the fourth layer is covered by a sixth layer which is capable of retaining moisture and which is permeable to oxygen.

9. The thin film structure according to claim 8, wherein the third layer and the fifth layer are formed by two portions of the same laminar sheet, which has been folded to provide two overlapping portions between the second and the fourth layers, and wherein
the first and the second layers are deposited on a first portion of the laminar sheet and the fourth and any sixth layers are deposited on the same side of the laminar sheet within a second portion forming the adjacent and opposite portion of the sheet with respect to a folding line of the laminar sheet, whereby the second and fourth layers can be brought into in juxtaposed position by folding the laminar sheet along the folding line to abut the back parts of the laminar sheet portions.

10. The thin film structure according to any of claims 8 to 9, wherein the third and optionally fifth layer is capable of wicking moisture for activating the cathode layer.

11. The thin film structure according to any of claims 1 to 10, wherein the thin film is produced by printing.

12. Use of a thin film structure according to any of the previous claims
- as cathode in an electrochemical cell for producing electricity preferably in conjunction with electronic components having an energy demand of 1 mW or less;
- as a humidity sensor or
- as an RFID Tag capable of measuring and storing data.

13. The use according to claim 12, wherein the thin film structure forms a part of a electrochemical cell and wherein the material of the anode is selected from the group consisting of conductive metals, conductive metal alloys, biocatalysts and mixtures thereof.

14. Method of producing a thin layer, comprising the steps of
- depositing on a suitable substrate a mixture formed by an oxidizing enzyme and an electron transfer mediator, said deposited layer being sufficiently porous to allow for immediate activation of the oxidizing enzyme when contacted with an aqueous solution, wherein the mixture of the enzyme and the mediator further contains a conductive ink which comprises an electrically conductive component selected from the group consisting of carbon nanotubes, metal particles, carbon particles and inherently conductive polymers and mixtures thereof, and
- protecting the deposited thin layer against wetting to allow for its storage in dry conditions,
wherein the thin layer of the oxidizing enzyme is formed by printing, coating or by an equivalent technique to provide a layer having an average thickness of about 10 to 150 µm, preferably about 20 nm to 100 µm, and the conductive ink comprises a hydroscopic substance for enhancing the stability of the enzyme, the moisture absorbing component being present at a concentration of 0.001 to 10 wt-% by the dry matter of the layer, and
wherein the step of protecting the deposited thin layer comprises fitting the thin layer into a package which is impermeable to air and moisture for storing in inactivated condition.

## Patentansprüche

1. Dünnschichtstruktur, die ein Substrat mit einer dünnen leitenden Schicht umfasst, die ein oxidierendes Enzym enthält, das mit einem Elektronentransfermediator gemischt ist, wobei die dünne Schicht gegen Befeuchten geschützt ist, um die Lagerung unter trockenen Bedingungen zu ermöglichen, und weiter ausreichend porös ist, um die sofortige Aktivierung des oxidierenden Enzyms zu erlauben, wenn sie mit einer wässrigen Lösung in Kontakt gebracht wird,
wobei die Mischung des Enzyms und des Mediators weiter eine leitfähige Tinte enthält, die eine elektrisch leitfähige Komponente umfasst, die aus der Gruppe ausgewählt ist, bestehend aus Kohlenstoff-Nanoröhren, Metallteilchen, Kohlenstoffteilchen und inhärent leitfähigen Polymeren und Mischungen davon und optional einem Bindemittel, und
wobei die dünne Schicht des oxidierenden Enzyms durch Drucken, Beschichten oder durch eine vergleichbare Technik gebildet ist, um eine Schicht bereitzustellen, die eine durchschnittliche Dicke von etwa 20 nm bis 100 µm aufweist, und die Schicht ein wasserlösliches Polymer als eine Feuchtigkeits-absorbierende Komponente umfasst, und die leitfähige Tinte ein hygroskopisches Substrat umfasst, um die Stabilität des Enzyms zu verbessern, wobei die Feuchtigkeits-absorbierende Komponente in einer Konzentration von 0,001 bis 10 Gew.-% der Trockenmasse der Schicht vorhanden ist.

2. Dünnschichtstruktur nach Anspruch 1, wobei die dünne Schicht so porös ist, dass die Kathodenschicht innerhalb von 10 Sekunden, bevorzugt etwa 5 Sekunden, insbesondere etwa 2 Sekunden ab dem Zeitpunkt, an dem die Schicht mit Wasser und Sauerstoff in Kontakt gebracht wird, ein Aktivitätsniveau erreicht, das mindestens 70 % des maximalen Aktivitätsniveaus beträgt.

3. Dünnschichtstruktur nach Anspruch 1 oder 2, wobei das Substrat ein poröses Substrat umfasst, das aus der Gruppe ausgewählt ist, bestehend aus porösen faserigen Vliesen und Bahnen natürlichen oder synthetischen Ursprungs, das poröse Substrat insbesondere aus Cellulose- und Lignocellulosematerialien ausgewählt wird, wie Papier- oder Kartonbögen, zum Beispiel Filterpapier.

4. Dünnschichtstruktur nach einem der vorstehenden Ansprüche, wobei das oxidierende Enzym aus der Gruppe von Peroxidasen und Oxidasen ausgewählt ist, insbesondere das Enzym aus der Gruppe der Laccasen (EC 1.10. 3.2), Catecholoxidasen (EC 1.10. 3.1), Tyrosinasen (EC 1.14. 18.1), Bilirubinoxidasen (EC 1.3 3.5), Peroxidase (EC 1.111.7), Manganperoxidase (EC 1.11. 1.13), Lignin Peroxidase (EC 1.11. 1.14), Cytochrom-c Oxidase (1.9.3.1), L-Ascorbat Oxidase (1.10.3.3) und Ceruloplasmin (1.16.3.1) ausgewählt ist.

5. Dünnschichtstruktur nach Anspruch 4, wobei das Enzym eine Aktivität von etwa 1 bis 100.000 nkat/g aufweist, bevorzugt 10 bis 500 nkat/g, und in einer Menge von 0,0001 bis 10 mg Protein/g von Trockenmasse der Kathodenschicht eingesetzt wird und wobei das Enzym optional ein Redoxpotential, ausgedrückt als V gegen NHE, von mindestens 0,3 aufweist.

6. Dünnschichtstruktur nach Anspruch 4, wobei der Mediator aus der Gruppe ausgewählt ist, die aus ABTS [2,2'-Azino-bis(3-ethylbenzothiazolin-6-sulfonsäure)], Methylsyringat [Methyl-3,5-dimethoxy-4-hydroxybenzoat] und anderen Methoxy- und Dimethoxyphenolen und Ferrocencarboxyaldehyd und anderen Ferrocen-Derivaten und Mischungen davon besteht, und der Mediator bevorzugt in einer Konzentration von 0,001 bis 10,0 Gew.-% der Kathodenschicht vorhanden ist.

7. Dünnschichtstruktur nach einem der vorstehenden Ansprüche, umfassend ein wasserlösliches Polymer, das aus Polyvinylalkohol als eine Feuchtigkeits-absorbierende Komponente ausgewählt ist, und wobei die leitfähige Tinte eine hygroskopische Substanz umfasst, die aus einer polymeren Komponente oder einem Polysaccharid zum Verbessern der Stabilität des Enzyms ausgewählt ist, wobei die Feuchtigkeits-absorbierende Komponente bevorzugt bei einer Konzentration von 0,1 bis 7,5 Gew.-% vorhanden ist.

8. Dünnschichtstruktur nach einem der vorstehenden Ansprüche, die einen Teil einer laminaren Struktur bildet, mit, in der angegebenen Reihenfolge,
- einer ersten planaren Schicht, die einen Stromkollektor bildet,
- einer zweiten planaren Schicht, die auf der Oberseite der ersten Schicht angeordnet ist, wobei die zweite Schicht die Anode der Zelle bildet,
- eine dritte Schicht, die ein poröses Substrat bildet, und
- eine vierte Schicht, die durch Drucken auf dem porösen Substrat gebildet wird, wobei die vierte Schicht die Dünnschichtkonstruktion umfasst und eine Mischung aus einer Phenoloxidase und einem Mediator enthält, und
wobei eine fünfte Schicht zwischen der zweiten und der dritten Schicht angeordnet ist, wobei die fünfte Schicht in der Lage ist, die zweite und die dritte Schicht zu trennen und Umstellung von Ladungsträgern zwischen den Elektroden der Zelle zu erlauben, und wobei die vierte Schicht von einer sechsten Schicht abgedeckt wird, die in der Lage ist, Feuchtigkeit zu halten, und die sauerstoffdurchlässig ist.

9. Dünnschichtstruktur nach Anspruch 8, wobei die dritte Schicht und die fünfte Schicht durch zwei Abschnitte der gleichen laminaren Bahn, die gefaltet wurde, um zwei überlappende Abschnitte zwischen der zweiten und der vierten Schicht zu liefern, gebildet werden, und wobei
die erste und zweite Schicht auf einem ersten Abschnitt der laminaren Bahn aufgebracht sind, und vier vierte und jede sechste Schicht auf der gleichen Seite der laminaren Bahn in einem zweiten Abschnitt, der den benachbarten und gegenüberliegenden Abschnitt der Bahn in Bezug auf eine Faltlinie der laminaren Bahn bildet, aufgebracht sind, wodurch die zweite und vierte Schicht durch Falten der laminaren Bahn entlang der Faltungslinie in eine nebeneinanderliegende Position gebracht werden können, um an die hinteren Teile der laminaren Bahn anzugrenzen.

10. Dünnschichtstruktur nach einem der Ansprüche 8 bis 9, wobei die dritte und optional fünfte Schicht in der Lage ist, Feuchtigkeit zur Aktivierung der Kathodenschicht anzusaugen.

11. Dünnschichtstruktur nach einem der Ansprüche 1 bis 10, wobei die Dünnschicht durch Drucken hergestellt wird.

12. Verwendung einer Dünnschichtstruktur nach einem der vorstehenden Ansprüche
- als Kathode in einer elektrochemischen Zelle, um Elektrizität bevorzugt in Verbindung mit elektrischen Komponenten zu erzeugen, die einen Leistungsbedarf von 1 mW oder weniger aufweisen;
- als einen Feuchtigkeitssensor oder
- als eine RFID Kennzeichnung, die in der Lage ist, Daten zu messen und speichern.

13. Verwendung nach Anspruch 12, wobei die Dünnschichtstruktur einen Teil einer elektrochemischen Zelle bildet und wobei das Material der Anode aus der Gruppe ausgewählt ist, die aus leitfähigen Metallen, leitfähigen Metalllegierungen, Biokatalysatoren und Mischungen davon besteht.

14. Verfahren zur Herstellung einer Dünnschicht, umfassend die Schritte
- Abscheiden einer Mischung auf einem geeigneten Substrat, durch ein oxidierendes Enzym und einen Elektronentransfermediator, wobei die abgeschiedene Schicht ausreichend porös ist, um die sofortige Aktivierung des oxidierenden Enzyms zu ermöglichen, wenn sie mit einer wässrigen Lösung in Kontakt gebracht wird, wobei die Mischung des Enzyms und des Mediators weiter eine leitfähige Tinte enthält, die eine elektrisch leitfähige Komponente umfasst, die aus der Gruppe ausgewählt ist, die aus Kohlenstoff-Nanoröhren, Metallteilchen, Kohlenstoffteilchen und inhärent leitfähigen Polymeren und Mischungen davon besteht, und
- Schützen der abgeschiedenen Dünnschicht gegen Befeuchtung, um ihre Lagerung unter trockenen Bedingungen zu erlauben,
wobei die Dünnschicht des oxidierenden Enzyms durch Drucken, Beschichten oder durch eine vergleichbare Technik gebildet wird, um eine Schicht bereitzustellen, die eine durchschnittliche Dicke von etwa 10 bis 150 µm, bevorzugt etwa 20 nm bis 100 µm, aufweist, und die leitfähige Tinte eine hygroskopische Substanz zum Verbessern der Stabilität des Enzyms umfasst, die Feuchtigkeits-absorbierende Komponente in einer Konzentration von 0,001 bis 10 Gew.-% der Trockenmasse der Schicht vorhanden ist, und
wobei der Schritt zum Schützen der abgeschiedenen Dünnschicht Einpassen der Dünnschicht in eine Verpackung umfasst, die für Luft und Feuchtigkeit undurchlässig ist, zur Lagerung im inaktivierten Zustand.

## Revendications

1. Structure à film mince, qui comprend un substrat avec une couche conductrice mince contenant une enzyme oxydante mélangée avec un médiateur de transfert d'électrons, ladite couche mince étant protégée contre le mouillage pour permettre son stockage en conditions sèches et étant en outre suffisamment poreuse pour permettre une activation immédiate de l'enzyme oxydante lorsqu'elle est mise en contact avec une solution aqueuse,
dans laquelle le mélange de l'enzyme et du médiateur contient en outre une encre conductrice qui comprend un composant électriquement conducteur sélectionné à partir du groupe constitué par des nanotubes de carbone, des particules métalliques, des particules de carbone et des polymères intrinsèquement conducteurs et des mélanges de ceux-ci et, facultativement, un liant, et
dans laquelle la couche mince de l'enzyme oxydante est formée par impression, revêtement ou par une technique équivalente pour fournir une couche présentant une épaisseur moyenne d'environ 20 nm à 100 µm, et la couche comprend un polymère soluble dans l'eau en tant que composant absorbant l'humidité, et l'encre conductrice comprend une substance hygroscopique pour améliorer la stabilité de l'enzyme, le composant absorbant l'humidité étant présent dans une concentration de 0,001 à 10 % en poids par la matière sèche de la couche.

2. Structure à film mince selon la revendication 1, dans laquelle la couche mince est tellement poreuse que la couche de cathode va atteindre un niveau d'activité, qui représente au moins 70 % du niveau d'activité maximale en moins de 10 secondes, de préférence environ 5 secondes, en particulier environ 2 secondes, à partir du moment où la couche est mise en contact avec de l'eau et de l'oxygène.

3. Structure à film mince selon la revendication 1 ou 2, dans laquelle le substrat comprend un substrat poreux sélectionné à partir du groupe constitué par des toiles et des feuilles fibreuses poreuses d'origine naturelle ou synthétique, en particulier le substrat poreux est sélectionné parmi des matériaux cellulosiques et lignocellulosiques, tels que du papier ou des feuilles de carton, par exemple du papier filtre.

4. Structure à film mince selon l'une quelconque des revendications précédentes, dans laquelle l'enzyme oxydante est sélectionnée à partir du groupe de peroxydases et d'oxydases, en particulier l'enzyme est sélectionnée à partir du groupe de laccases (EC 1.10. 3.2), de catéchol oxydases (EC 1.10. 3.1), de tyrosinases (EC 1.14. 18.1), de bilirubine oxydases (EC 1.3. 3.5), de peroxydase (EC 1.11. 1.7), de manganèse peroxydase (EC 1.11. 1.13), de lignine peroxydase (EC 1.11. 1.14), de cytochrome-c oxydase (1.9.3.1), de L-ascorbate oxydase (1.10.3.3) et de céruloplasmine (1.16.3.1).

5. Structure à film mince selon la revendication 4, dans laquelle l'enzyme a une activité d'environ 1 à 100 000 nkat/g, de préférence de 10 à 500 nkat/g, et elle est employée dans une quantité de 0,0001 à 10 mg de protéine/g de matière sèche de la couche de cathode, et dans laquelle, facultativement, l'enzyme a un potentiel d'oxydoréduction, exprimé en tant que V vs. NHE, d'au moins 0,3.

6. Structure à film mince selon la revendication 4, dans laquelle le médiateur est sélectionné à partir du groupe constitué par l'ABTS [acide 2,2'-azino-bis(3-éthylbenzothiazoline-6-sulfonique)], le méthylsyringate [méthyl 3,5-diméthoxy-4-hydroxybenzoate] et d'autres méthoxy et diméthoxy phénols, et le ferrocènecarboxyaldéhyde et d'autres dérivés de ferrocène, et des mélanges de ceux-ci, et le médiateur est de préférence présent dans une concentration de 0,001 à 10,0 % en poids de la couche de cathode.

7. Structure à film mince selon l'une quelconque des revendications précédentes, comprenant un polymère soluble dans l'eau sélectionné parmi le polyalcool vinylique en tant que composant absorbant l'humidité, et l'encre conductrice comprend une substance hygroscopique sélectionnée parmi un composant polymérique ou un polysaccharide pour améliorer la stabilité de l'enzyme, dans laquelle le composant absorbant l'humidité est de préférence présent dans une concentration de 0,1 à 7,5 % en poids.

8. Structure à film mince selon l'une quelconque des revendications précédentes, faisant partie d'une structure laminaire avec, dans l'ordre indiqué,
- une première couche plane formant un collecteur de courant,
- une deuxième couche plane placée par-dessus la première couche, ladite deuxième couche formant l'anode de la pile,
- une troisième couche qui forme un substrat poreux, et
- une quatrième couche formée par-dessus le substrat poreux par impression, ladite quatrième couche comprenant la construction à film mince et contenant un mélange d'une phénoloxydase et d'un médiateur, et
dans laquelle une cinquième couche est placée entre les deuxième et troisième couches, ladite cinquième couche étant capable de séparer les deuxième et troisième couches et permettre une migration de porteurs de charge entre les électrodes de la pile et dans laquelle la quatrième couche est recouverte par une sixième couche qui est capable de retenir l'humidité et qui est perméable à l'oxygène.

9. Structure à film mince selon la revendication 8, dans laquelle la troisième couche et la cinquième couche sont formées par deux portions de la même feuille laminaire, qui a été pliée pour fournir deux portions chevauchantes entre les deuxième et quatrième couches, et dans laquelle
les première et deuxième couches sont déposées sur une première portion de la feuille laminaire et la quatrième et toute sixième couches sont déposées du même côté de la feuille laminaire dans une seconde portion formant la portion adjacente et opposée de la feuille par rapport à une ligne de pliure de la feuille laminaire, selon laquelle les deuxième et quatrième couches peuvent être amenées dans une position juxtaposée en pliant la feuille laminaire selon la ligne de pliure pour jouxter les parties arrière des portions de feuille laminaire.

10. Structure à film mince selon l'une quelconque des revendications 8 à 9, dans laquelle les troisième et facultativement cinquième couches sont capables de créer un effet de mèche d'humidité pour activer la couche de cathode.

11. Structure à film mince selon l'une quelconque des revendications 1 à 10, dans laquelle le film mince est produit par impression.

12. Utilisation d'une structure à film mince selon l'une quelconque des revendications précédentes,
- en tant que cathode dans une pile électrochimique pour produire de l'électricité de préférence en conjonction avec des composants électroniques ayant une demande énergétique de 1 mW ou moins ;
- en tant que capteur d'humidité ou
- en tant qu'étiquette RFID capable de mesurer et de stocker des données.

13. Utilisation selon la revendication 12, dans laquelle la structure à film mince fait partie d'une pile électrochimique et dans laquelle le matériau de l'anode est sélectionné à partir du groupe constitué par des métaux conducteurs, des alliages de métaux conducteurs, des biocatalyseurs et des mélanges de ceux-ci.

14. Procédé de production d'une couche mince, comprenant les étapes de
- dépôt sur un substrat adapté d'un mélange formé par une enzyme oxydante et un médiateur de transfert d'électrons, ladite couche déposée étant suffisamment poreuse pour permettre une activation immédiate de l'enzyme oxydante lorsqu'elle est mise en contact avec une solution aqueuse, dans lequel le mélange de l'enzyme et du médiateur contient en outre une encre conductrice qui comprend un composant électriquement conducteur sélectionné à partir du groupe constitué par des nanotubes de carbone, des particules métalliques, des particules de carbone et des polymères intrinsèquement conducteurs et des mélanges de ceux-ci, et
- protection de la couche mince déposée contre le mouillage pour permettre son stockage en conditions sèches,
dans lequel la couche mince de l'enzyme oxydante est formée par impression, revêtement ou par une technique équivalente pour fournir une couche présentant une épaisseur moyenne d'environ 10 à 150 µm, de préférence d'environ 20 nm à 100 µm, et l'encre conductrice comprend une substance hygroscopique pour améliorer la stabilité de l'enzyme, le composant absorbant l'humidité étant présent dans une concentration de 0,001 à 10 % en poids par la matière sèche de la couche, et
dans lequel l'étape de protection de la couche mince déposée comprend l'ajustement de la couche mince dans un boîtier qui est imperméable à l'air et à l'humidité pour un stockage en condition inactivée.
